# EUROPEAN PATENT SPECIFICATION

(11) **EP 1 611 289 B1**
(45) Date of publication and mention of the grant of the patent: **22.08.2007**
(21) Application number: 04721241.0
(22) Date of filing: 17.03.2004
(51) Int. Cl.: E01F 15/14, B60R 19/26

(54) **Crash barrier**
Aufprallsperre
Garniture de sécurité

(30) Priority: 21.03.2003 GB 0306542; 14.06.2003 GB 0313790; 05.07.2003 GB 0315799
(43) Date of publication of application: 04.01.2006
(73) Proprietor: Cellbond Limited, Huntingdon, Cambridgeshire PE29 6EF (GB)
(72) Inventor: ASHMEAD, Michael, Huntingdon, Cambridgeshire PE29 6EF (GB)
(74) Representative: Gwilt, Julia Louise
(86) International application number: PCT/GB2004/001121
(87) International publication number: WO 2004/083526

(56) References cited:
- EP-A- 0 592 714
- EP-A- 1 001 091
- US-A- 4 026 534
- US-B1- 6 203 079

## Description

### FIELD OF INVENTION

The present invention relates to a crash barrier particularly, but not exclusively for mounting on the rear of a relatively massive object, e.g. a lorry to protect vehicle occupants involved in a collision with the object.

### BACKGROUND ART

It is known that workmen repairing or widening carriageways are at risk of death or serious injury from accidental impacts with vehicles using the carriageways. As a result, relatively massive objects, usually lorries, are positioned on the carriageways to shield the workmen from such impacts. However, this gives rise to another problem, and a health and safety regulation has been introduced requiring the use of energy absorbing structures on the relatively massive objects, *e.g.* in the form of lorry mounted crash barriers, to protect occupants of a vehicle which may be in collision with the relatively massive objects.

Such lorry mounted crash-barrier cushions (or truck-mounted attenuators) are known from EP 1,001,091 and US 6,244,637. These publications describe barriers comprising a frame of hinged arms which together define two bays in which energy absorbing elements are disposed. Restraints are provided on the hinges to resist movement of the hinges. On impact, the restraints break, allowing the frame to collapse and compress the energy-absorbing element.

EP 0,592,714 discloses a car bumper system comprising hinged arms connected to damping elements for absorbing impact forces.

### DISCLOSURE OF INVENTION

According to a first aspect of the invention, there is provided a crash barrier for deployment on a mobile body, comprising: a support member for attachment to the mobile body; a bumper spaced from the support member for engaging a vehicle during impact with the crash barrier; a linear guide system for guiding the bumper towards the support member during impact; and an energy absorber configured to absorb impact energy as the bumper is guided towards the support member; wherein the guide system comprises first and second elongate members, one end of each being pivotally coupled at a variable acute angle to the support member, and a third elongate member pivotally coupled to the first and second members to define with the support member a parallelogram with variations in magnitude of the acute angle determining separation between the third and support members.

The present applicant has appreciated that the parallelogram framework has a number of advantages as a linear guide system. Firstly, it can be retracted for ease of transportation or storage. Furthermore, it may readily be configured to be strong enough to resist damage in an impact without interfering with the performance of the energy absorber. The parallelogram framework may be aligned horizontally at least when the linear guide system is deployed. In this way, the parallelogram framework will pivot in such a way that the third elongate member will be urged laterally relative to the crash barrier, substantially perpendicular to the impact direction.

The guide system of the crash barrier may further comprise at least one further elongate member pivotally coupled to the parallelogram (e.g. the third elongate member) at a variable angle. The at least one further elongate member may also be pivotally coupled (directly or indirectly) to the bumper. The at least one further elongate member may define with the third elongate member part of another parallelogram framework arranged in series with the aforementioned parallelogram (hereinafter referred to as the "first parallelogram"). The two parallelograms may be substantially parallel, perhaps even aligned in a common plane. The two parallelograms may be of equal size, with one being arranged as a mirror image of the other (i.e. with the third elongate member acting as a mirror plane).

The guide system of the crash barrier may comprise at least one further array of elongate members arranged in an equivalent manner to the first, second and third elongate members, with each at least one further array of elongate members defining with the support member a respective additional parallelogram. One of the respective additional parallelograms may be arranged to one lateral side of the first parallelogram, and may be arranged as a mirror image of the first parallelogram. Each parallelogram may be configured so that a respective part is urged laterally away from a corresponding part of the other parallelogram during an impact. Such side-by-side symmetry may help to balance the guide system. The first parallelogram and its mirror image may each be pivotally coupled via respective elongate members to a common support. In this way, the common support may be constrained to move linearly towards the support member during an impact, even though parts of the two parallelograms disposed therebetween are urged laterally.

At least one of the respective additional parallelograms may be arranged in a plane parallel to but spaced from that of the first parallelogram. The energy absorber may be disposed in spacing between respective planes of the parallelograms. Such an arrangement above-and-below the energy absorber may further balance the guide system, helping to resist any upward force impacted on the bumper during impact.

The energy absorber may be sacrificial i.e. may deform permanently when absorbing energy from an impact. In other words plastic not elastic deformation may occur. The energy absorber may comprise a honeycomb structure, e.g. a cellular structure having an array of cells of hexagonal cross-section. The cells may be aligned with their axes parallel to a notional line extending between the support member and bumper. Advantageously, the guiding system may be configured to maintain during impact a predetermined orientation between the bumper and the energy absorber. Thus, the guiding system helps to control the direction of the impact on the honeycomb structure, enabling impact forces to be directed parallel to cell axes - the optimum direction for energy absorption in the honeycomb structure.

The properties of the sacrificial energy-absorber (such as the material, cell size and cell wall thickness) may be selected to provide a level of energy absorption appropriate for the conditions in which the crash barrier is used. For example, if the crash barrier is for use on motorways or other high speed roads (e.g. having speed limit of 70mph), the energy-absorber may need to deform more readily than one deployed in a crash barrier for use in built-up areas or other low speed roads (e.g. having speed limit of 30mph). In this way, impact forces experienced by vehicle occupants colliding with the crash barrier may be reduced to tolerable levels.

Alternatively, the energy absorber may be re-usable and configured to survive the impact. The energy-absorber may comprise a disc brake or the like which may be mounted to resist pivotal movement of the elongate members relative to each other or relative to the support member. The disc brake may be mounted at the joints connecting the first and second members to the support member or to the third elongate member.

The energy-absorber may comprise a fluid actuator, such as a hydraulic ram, configured to control separation between the third and support members. For example, the fluid actuator may be disposed along one diagonal of the first parallelogram. By providing the fluid actuator along a diagonal rather than along the sides of the framework, the length of the actuator is maximised. The fluid actuator may be configured to retract and deploy the parallelogram framework for storage/transportation and active use respectively.

The fluid actuator provides a resistance to a change in separation between the third and support members which would result from an impact. The resistance provides the mechanism for energy absorption during the impact. The resistance may be uniform per unit change in separation between the third and support members. Different levels of resistance may be chosen to suit characteristics of potential impacts. Alternatively, the resistance may vary with increasing change in separation between the third and support members. The resistance of the hydraulic actuator may even be controlled dynamically, for example in dependence on information sensed during an impact.

The fluid (e.g. hydraulic) actuator may be configured to have increased resistance below a threshold speed and decreased resistance above the threshold speed. In other words, the hydraulic actuator may act as the energy absorber in a strengthening assembly of a variable bumper system of the kind taught in WO 02/057119. Such a variable bumper system addresses the conflicting requirements of a bumper system, namely it must be stiff enough to withstand impacts at low speed without compromising the safety of a pedestrian in higher speed collisions.

Bumper deformation resistance may be increased by more than 50%, perhaps even 100%, below the threshold speed. The threshold speed may be approximately 5 mph. In this way, the bumper system will be more rigid at so-called "parking speeds" where minor vehicle-to-vehicle bumps are common, than at so-called "around town speeds" of about 30 mph.

In a variable bumper system, there may be limited space. The linear guide system may comprise at least one array of only two parallelogram frameworks which are connected in series. The system may comprise more than one array mounted in parallel. Each array may comprise a first parallelogram framework which is connected to the bumper and to a second parallelogram framework connected to the vehicle. A hydraulic actuator may be connected along a diagonal of the first or second framework. Alternatively, a reusable energy absorber, such as a disc brake may be used to resist deformation of the parallelogram frameworks.

The bumper, which in use will engage a vehicle during impact with the crash barrier, may be configured to prevent the vehicle slipping under the linear guide system. The bumper may comprise a sacrificial member configured to deform during impact. The sacrificial member may be configured to adopt a profile during deformation which corresponds to that of the object colliding therewith. Such a sacrificial member may help to improve transfer of forces imparted by the object to the guide system and energy absorber.

### BRIEF DESCRIPTION OF DRAWINGS

For a better understanding of the invention specific embodiments will now be described, purely by way of example, with reference to the accompanying drawings in which:
Figure 1 shows schematically a perspective view of a crash barrier embodying the present invention;
Figure 2 shows schematically a side view of the crash barrier of Figure 1;
Figure 3 shows schematically a plan view of the crash barrier of Figure 1, with a different energy absorber;
Figures 4a and 4b show schematically a plan view of part of the crash barrier of Figure 1, respectively before and during impact;
Figure 5 shows a schematic view of a bumper system, incorporating a crash barrier embodying the present invention, and
Figure 6 is a schematic view showing the detail of the bumper system of Figure 5.

### DETAILED DESCRIPTION OF DRAWINGS

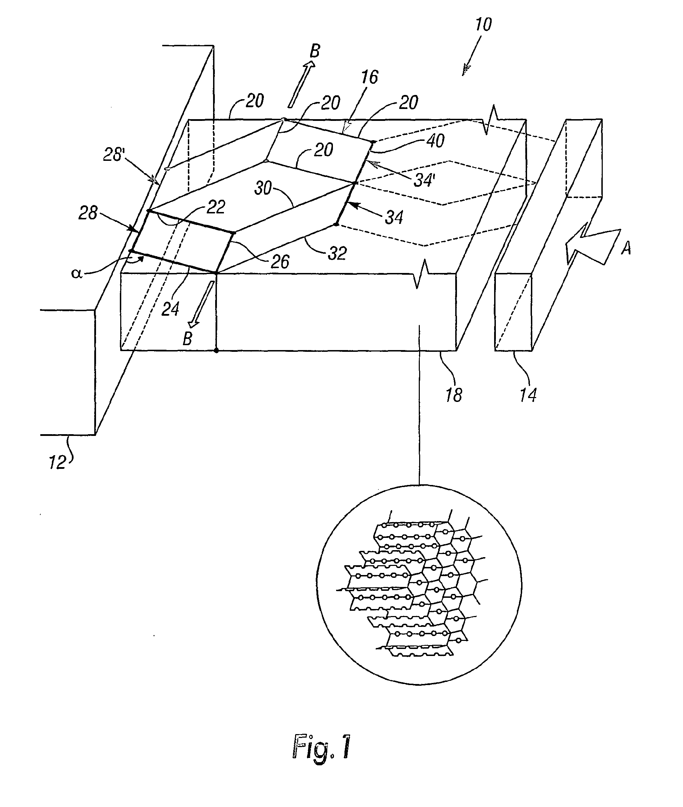

Figure 1 shows a crash barrier (10) according to a first embodiment of the present invention. The crash barrier (10) comprises a support member (12) for attachment to a mobile body, such as the front of a lorry, and a bumper (14) spaced from the support member (12) for engaging a vehicle colliding head-on with the crash barrier (10) (see arrow A). A linear guide system (16) couples the bumper (14) to the support member (12), and is configured to guide the bumper (14) along a linear path towards the support member (12) during a head-on collision as energy absorber (18) absorbs impact energy by deformation. The linear guide system (16) comprises a framework of elongate members or rods (20), including first and second elongate members (22,24) pivotally coupled at a variable acute angle (α) to the support member (12). For example, angle (α) may be in the range 80° to 10°, perhaps 75° to 25°. A third elongate member (26) is pivotally coupled to each of the first and second members (22,24) to define with the support member a framework parallelogram (28) (shown in bold). The separation between the support member (12) and the third elongate member (26) (along a notional line extending between the support member (12) and the bumper (14)) varies with the magnitude of acute angle (α).

As shown in Figure 1, the framework parallelogram (28) is aligned in a horizontal plane. In the same horizontal plane, two further elongate members (30,32) are pivotally coupled to the third elongate member (26) and define part of another framework parallelogram (34) arranged in series with parallelogram framework (28). The framework parallelograms (28,34) are equal in size with one being arranged as a mirror image of the other, with member (26) acting as the mirror plane. Further "pairs" of parallelogram frameworks are provided in series to establish a pivotal connection to bumper (14).

As also shown in Figure 1, the linear guide system (16) comprises at least one further array of elongate members arranged in an equivalent manner to the first, second and third elongate members (22,24,26). The further array of elongate members defines with the support member (12) a respective additional parallelogram framework (28'). The respective additional parallelogram framework (28') is a mirror image of parallelogram framework (28), about a notional central line extending from support member (12) to bumper (14). The parallelogram framework (28') is pivotally coupled to elongate members which define part of another framework parallelogram (34') which mirrors framework (34). In fact, parallelogram frameworks (34,34') are linked by common support (40), forming one side of each. In this way, as guiding system (16) guides bumper (14) towards support member (12), the common support (40) will be constrained to move directly towards support member (12). In contrast, elongate member (26) (and its counterpart (26')) will be urged outwardly in the direction of arrows B.

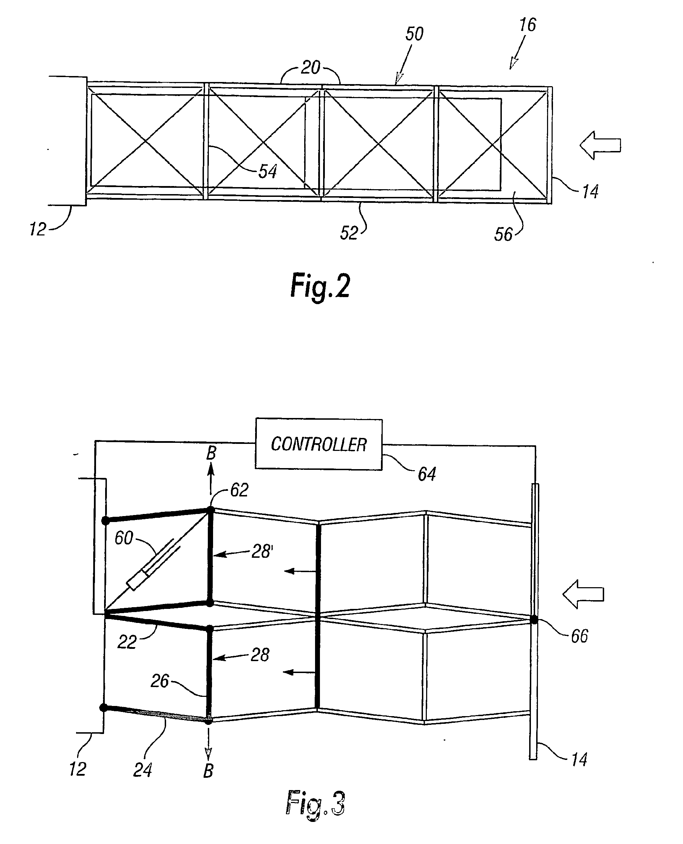

As shown in Figure 2, the guiding system (16) also comprises a framework of elongate members (20) below the energy absorber (18). The upper and lower parts (50,52) of guiding system (16) may be identically configured, with extremities of each "pair" of framework parallelograms coupled by connectors (54). In this way, an open-lattice box-structure is created which provides increased resistance to impact forces acting to deflect the guidance system from its linear path. The energy absorber (18) (e.g. one or more blocks of honeycomb structure) is shorter than the maximum separation between support member (12) and bumper (14), with gap (56) provided between bumper (14) and energy absorber (18). As shown in Figure 1, a honeycomb structure would be deployed with the columnar or central axis of the hexagonal cells aligned parallel to a notional line extending between the support member (12) and bumper (14).

Figure 3 shows an alternative crash barrier (10') which employs the same linear guide system (16) as Figures 1 and 2. Instead of a sacrificial energy absorber (18), a fluid actuator (60) is provided along a diagonal of parallelogram framework (28'). The fluid actuator (60) (e.g. hydraulic ram) provides a resistance to outward movement (arrow B) of corner region (62). This in turn provides resistance to linear movement of common support (40), which in turn provides resistance to outward movement (arrow B) of third elongate member (26). The resistance of fluid actuator (60) may be pre-determined at a uniform level, or may be dynamically controlled by controller (64), acting in dependence upon information received from sensor (66) about impact.

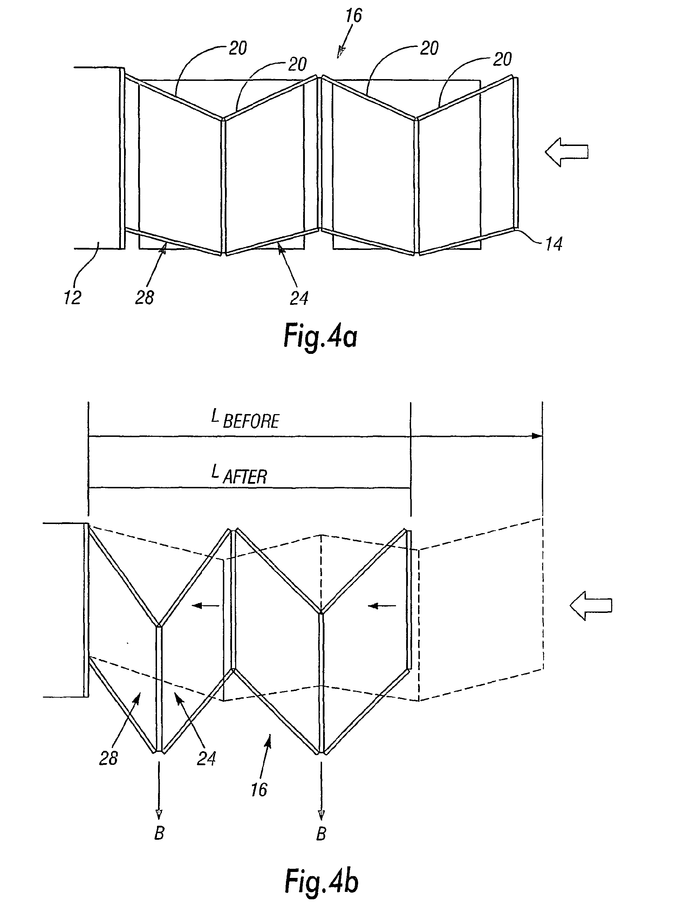

Figures 4a and 4b show schematically the positions of two pairs of parallelogram frameworks (28,34) before and after impacts. During impact, the longitudinal extent of length "L" of the guide system (16) is reduced without plastic deformation of the elongate members (20). Impact energy is absorbed by energy absorber (18) or fluid actuator (60).

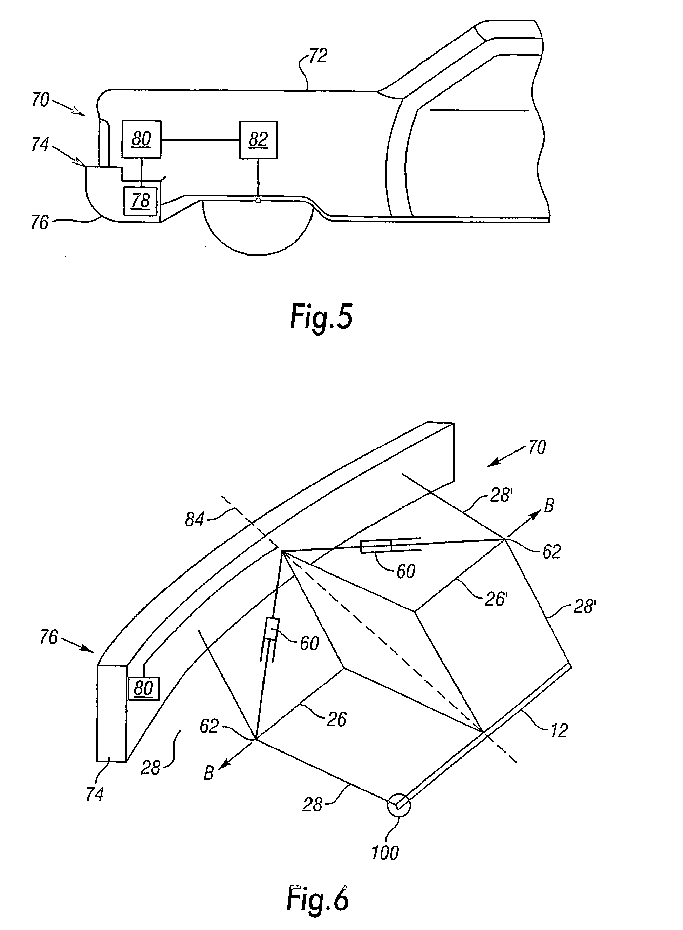

Figure 5 shows schematically a bumper system (70) embodying the crash barrier invention in context with a variable bumper system for a car (72). The bumper system (70) comprises a crash barrier or bumper (74) having a protuberant profile defining a front surface (76) which is intended to make first contact with an obstacle (e.g. car or pedestrian) during a collision. The bumper system (70) also comprises a strengthening assembly (78) for in use reinforcing the front surface (76) of the bumper (74) to increase bumper deformation resistance. The strengthening assembly (78) is controlled by a controller (80) in dependence upon vehicle speed sensed by sensor (82). If vehicle speed is below a threshold level, the controller (80) activates the strengthening assembly (78) so as to increase the stiffness of the front surface (76) of the bumper (74).

Figure 6 shows schematically a part of the bumper system (70) of Figure 5. The strengthening assembly (78) comprises a linear guide system which is similar to that of Figure 3 and which is pivotally coupled to a support member (12) by which the linear guide system is attached to the car. Since there is limited space, perhaps only a depth of 200mm, the linear guide system comprises two arrays of framework parallelograms (28, 28') each having a pair of parallelograms mounted in series. One parallelogram of each pair is arranged as a mirror image of the other, with members (26,26') acting as the mirror plane. The arrays of framework parallelograms (28, 28') are arranged in parallel (i.e. side-by-side) with one pair being arranged as a mirror image of the other pair about a notional central line (84) extending from support member (12) to bumper (74). All the parallelograms (28, 28') are equal in size.

A first parallelogram framework of each pair is pivotally attached to the bumper (74) and a second parallelogram framework of each pair is pivotally attached to the support member (12). The first framework is provided along its diagonal with a fluid actuator (60). The fluid actuator (60) (e.g. hydraulic ram) provides a resistance to outward movement (arrow B) of corner region (62). The fluid actuators (60) are connected to the controller (80) which is configured to control the resistance to this outward movement provided by each fluid actuator. For example, the controller (80) is configured to decrease the resistance once the speed exceeds the threshold value. The strengthening assembly always remains concealed behind the leading surface of the bumper.

In an alternative arrangement, the fluid actuators (60) may be replaced by another reusable energy absorber, such as a disc brake (100). The disc brake (100) shown schematically in just one possible location in Figure 6, may be arranged to resist any change in corner angles of parallelograms (28, 28'). For example, the disc brake may be positioned adjacent one corner of one parallelogram (28,28') to control angular separation between two sides pivotally connected at that corner.

## Claims

1. A crash barrier (10) for deployment on a mobile body, comprising:
- a support member (12) for attachment to the mobile body;
- a bumper (14) spaced from the support member for engaging a vehicle during impact with the crash barrier;
- a linear guide system (16) for guiding the bumper towards the support member during impact;
- and an energy absorber (18) configured to absorb impact energy as the bumper (14) is guided towards the support member (12);
**characterised in that** the guide system comprises first and second elongate members (22,24), one end of each being pivotally coupled at a variable acute angle (α) to the support member (12), and a third elongate member (26) pivotally coupled to the first and second members (22,24) to define with the support member (12) a parallelogram (28) with variations in magnitude of the acute angle (α) determining separation between the third and support members.

2. A crash barrier according to claim 1, in which the parallelogram (28) is aligned horizontally, when at least the linear guide system is deployed.

3. A crash barrier according to claim 1 or claim 2, in which the guide system further comprises at least one further elongate (30, 32) member pivotally coupled to the parallelogram at a variable angle.

4. A crash barrier according to claim 3, in which the at least one further elongate member defines with the third elongate member part of another parallelogram (34) arranged in series with the aforementioned parallelogram.

5. A crash barrier according to claim 4, in which each parallelogram defines a plane, with the plane of one parallelogram being parallel to that of the other.

6. A crash barrier according to claim 4 or 5, in which the parallelograms are of equal size, with one being arranged as a mirror image of the other.

7. A crash barrier according to any one of the preceding claims, in which the bumper and the parallelogram are pivotally coupled via at least one elongate member.

8. A crash barrier according to any one of the preceding claims, in which the guide system comprises at least one further array of elongate members, arranged in an equivalent manner to the first, second and third elongate members, each at least one further array of elongate members defining with the support member a respective additional parallelogram (28').

9. A crash barrier according to claim 8, in which one respective additional parallelogram is arranged to one lateral side of the parallelogram.

10. A crash barrier according to claim 9, in which the one respective additional parallelogram is arranged as a mirror image of the parallelogram.

11. A crash barrier according to claim 9 or 10, in which the parallelograms are pivotally coupled via respective elongate members to a common support (40).

12. A crash barrier according to any one of claims 8 to 11, in which one respective additional parallelogram is arranged in a plane parallel to but spaced from that of the parallelogram.

13. A crash barrier according to claim 12, in which the energy absorber is disposed in spacing between respective planes of the parallelograms.

14. A crash barrier according to any one of claims 1 to 13, in which the energy absorber is sacrificial.

15. A crash barrier according to claim 14, in which the sacrificial energy absorber comprises a honeycomb structure.

16. A crash barrier according to claim 15, in which the honeycomb structure comprises cells of hexagonal cross-section, with the cells aligned with their columnar axes aligned parallel to a notional line extending between the support member and bumper.

17. A crash barrier according to any one of claims 1 to 13, in which the energy absorber is re-usable after absorbing impact energy.

18. A crash barrier according to claim 17, in which the re-usable energy absorber comprises a disc brake.

19. A crash barrier according to claim 17, in which the re-usable energy absorber comprises a fluid actuator (60).

20. A crash barrier according to claim 19, in which the fluid actuator is aligned along a diagonal of the parallelogram.

21. A crash barrier according to claim 19 or claim 20, in which the fluid actuator provides a resistance to a change in separation between the third and support members, the resistance being pre-determined in dependence upon intended uses and likely potential impacts.

22. A crash barrier according to claim 19 or 20, in which the fluid actuator provides a resistance to a change in separation between the third and support members, the resistance being varied by a controller (64).

23. A crash barrier according to claim 22, in which the controller varies the resistance dynamically in dependence upon information sensed by a sensor (66) about impact characteristics.

24. A crash barrier according to claim 22, in which the controller varies the resistance so that there is increased resistance below a threshold speed and decreased resistance above the threshold speed.

25. A crash barrier according to claim 24, in which the threshold speed is 5 mph.

26. A crash barrier according to claim 24 or claim 25, comprising at least one array of only two parallelogram frameworks connected in series.

27. A crash barrier according to claim 26, wherein the at least one array comprises a first parallelogram framework connected to the bumper and a second parallelogram framework connected to the support member for attachment to the mobile body.

28. A crash barrier according to claim 27, when dependent on claim 19, wherein the hydraulic actuator is connected along a diagonal of the first parallelogram framework.

29. A crash barrier according to any one of the preceding claims, in which the bumper comprises a sacrificial member configured to adopt a profile during impact which corresponds to that of the impacting object.

30. A car bumper system incorporating a crash barrier according to any one of claims 1 to 29.

31. A lorry incorporating a crash barrier according to any one of claims 1 to 29.

## Patentansprüche

1. Aufprallsperre (10) zur Anbringung an einem beweglichen Körper, welche umfasst:
- ein Stützelement (12) zur Befestigung an dem beweglichen Körper;
- einen in einem Abstand von dem Stützelement angeordneten Stoßfänger (14), um mit einem Fahrzeug während eines Aufpralls auf die Aufprallsperre in Kontakt zu kommen;
- ein lineares Führungssystem (16) zum Führen des Stoßfängers während eines Aufpralls zu dem Stützelement hin;
- und einen Energieabsorber (18), der so gestaltet ist, dass er Aufprallenergie absorbiert, wenn der Stoßfänger (14) zu dem Stützelement (12) hin geführt wird;
**dadurch gekennzeichnet, dass** das Führungssystem umfasst:
ein erstes und ein zweites lang gestrecktes Element (22, 24), von denen jeweils ein Ende mit dem Stützelement (12) unter einem variablen spitzen Winkel (α) drehgelenkig verbunden ist, und ein drittes lang gestrecktes Element (26), das mit dem ersten und dem zweiten Element (22, 24) drehgelenkig verbunden ist, um mit dem Stützelement (12) ein Parallelogramm (28) zu definieren, wobei Änderungen der Größe des spitzen Winkels (α) den Abstand zwischen dem dritten und dem Stützelement bestimmen.

2. Aufprallsperre nach Anspruch 1, bei welcher das Parallelogramm (28) horizontal ausgerichtet ist, wenn wenigstens das lineare Führungssystem angebracht ist.

3. Aufprallsperre nach Anspruch 1 oder Anspruch 2, bei welcher das Führungssystem ferner wenigstens ein weiteres lang gestrecktes Element (30, 32) umfasst, das mit dem Parallelogramm unter einem variablen Winkel drehgelenkig verbunden ist.

4. Aufprallsperre nach Anspruch 3, bei welcher das wenigstens eine weitere lang gestreckte Element mit dem dritten lang gestreckten Element einen Teil eines anderen Parallelogramms (34) definiert, das mit dem vorgenannten Parallelogramm in Reihe angeordnet ist.

5. Aufprallsperre nach Anspruch 4, bei welcher jedes Parallelogramm eine Ebene definiert, wobei die Ebene eines Parallelogramms parallel zu der des anderen ist.

6. Aufprallsperre nach Anspruch 4 oder 5, bei welcher die Parallelogramme von gleicher Größe sind, wobei eines als ein Spiegelbild des anderen angeordnet ist.

7. Aufprallsperre nach einem der vorhergehenden Ansprüche, bei welcher der Stoßfänger und das Parallelogramm über wenigstens ein lang gestrecktes Element drehgelenkig verbunden sind.

8. Aufprallsperre nach einem der vorhergehenden Ansprüche, bei welcher das Führungssystem wenigstens eine weitere Anordnung von lang gestreckten Elementen umfasst, die auf eine zu dem ersten, zweiten und dritten lang gestreckten Element äquivalente Art und Weise angeordnet sind, wobei jede wenigstens eine weitere Anordnung von lang gestreckten Elementen mit dem Stützelement ein jeweiliges zusätzliches Parallelogramm (28') definiert.

9. Aufprallsperre nach Anspruch 8, bei welcher ein jeweiliges zusätzliches Parallelogramm an einer lateralen Seite des Parallelogramms angeordnet ist.

10. Aufprallsperre nach Anspruch 9, bei welcher das eine jeweilige zusätzliche Parallelogramm als ein Spiegelbild des Parallelogramms angeordnet ist.

11. Aufprallsperre nach Anspruch 9 oder 10, bei welcher die Parallelogramme über jeweilige lang gestreckte Elemente drehgelenkig mit einer gemeinsamen Stütze (40) verbunden sind.

12. Aufprallsperre nach einem der Ansprüche 8 bis 11, bei welcher ein jeweiliges zusätzliches Parallelogramm in einer Ebene angeordnet ist, die zu der des Parallelogramms parallel ist, jedoch einen Abstand von ihr aufweist.

13. Aufprallsperre nach Anspruch 12, bei welcher der Energieabsorber in einem Zwischenraum zwischen jeweiligen Ebenen der Parallelogramme angeordnet ist.

14. Aufprallsperre nach einem der Ansprüche 1 bis 13, bei welcher der Energieabsorber ein Opferteil ist.

15. Aufprallsperre nach Anspruch 14, bei welcher der ein Opferteil darstellende Energieabsorber eine Wabenstruktur umfasst.

16. Aufprallsperre nach Anspruch 15, bei welcher die Wabenstruktur Zellen mit sechseckigem Querschnitt umfasst, wobei die Zellen so ausgerichtet sind, dass ihre Spaltenachsen parallel zu einer imaginären Linie ausgerichtet sind, die sich zwischen dem Stützelement und dem Stoßfänger erstreckt.

17. Aufprallsperre nach einem der Ansprüche 1 bis 13, bei welcher der Energieabsorber nach dem Absorbieren von Aufprallenergie wiederverwendbar ist.

18. Aufprallsperre nach Anspruch 17, bei welcher der wiederverwendbare Energieabsorber eine Scheibenbremse umfasst.

19. Aufprallsperre nach Anspruch 17, bei welcher der wiederverwendbare Energieabsorber einen Fluidaktor (60) umfasst.

20. Aufprallsperre nach Anspruch 19, bei welcher der Fluidaktor entlang einer Diagonale des Parallelogramms ausgerichtet ist.

21. Aufprallsperre nach Anspruch 19 oder Anspruch 20, bei welcher der Fluidaktor einer Änderung des Abstands zwischen dem dritten und dem Stützelement einen Widerstand entgegen setzt, wobei der Widerstand in Abhängigkeit von beabsichtigten Verwendungen und wahrscheinlichen potentiellen Aufprallen vorbestimmt ist.

22. Aufprallsperre nach Anspruch 19 oder 20, bei welcher bei welcher der Fluidaktor einer Änderung des Abstands zwischen dem dritten und dem Stützelement einen Widerstand entgegen setzt, wobei der Widerstand durch eine Steuereinrichtung (64) geändert wird.

23. Aufprallsperre nach Anspruch 22, bei welcher die Steuereinrichtung den Widerstand dynamisch in Abhängigkeit von Informationen über Aufpralleigenschaften ändert, die von einem Sensor (66) erfasst werden.

24. Aufprallsperre nach Anspruch 22, bei welcher die Steuereinrichtung den Widerstand derart ändert, dass ein erhöhter Widerstand unterhalb eines Geschwindigkeitsschwellwertes und ein verminderter Widerstand oberhalb des Geschwindigkeitsschwellwertes vorhanden sind.

25. Aufprallsperre nach Anspruch 24, bei welcher der Geschwindigkeitsschwellwert 5 mph beträgt.

26. Aufprallsperre nach Anspruch 24 oder Anspruch 25, welche wenigstens eine Anordnung von nur zwei in Reihe verbundenen Parallelogrammgerüsten umfasst.

27. Aufprallsperre nach Anspruch 26, wobei die wenigstens eine Anordnung ein erstes Parallelogrammgerüst, das mit dem Stoßfänger verbunden ist, und ein zweites Parallelogrammgerüst, das mit dem Stützelement zur Befestigung an dem beweglichen Körper verbunden ist, umfasst.

28. Aufprallsperre nach Anspruch 27, wenn von Anspruch 19 abhängig, wobei der hydraulische Aktor entlang einer Diagonale des ersten Parallelogrammgerüstes verbunden ist.

29. Aufprallsperre nach einem der vorhergehenden Ansprüche, bei welcher der Stoßfänger ein Opferelement umfasst, das so gestaltet ist, dass es während eines Aufpralls ein Profil annimmt, welches dem des aufprallenden Objekts entspricht.

30. Autostoßfängersystem, das eine Aufprallsperre nach einem der Ansprüche 1 bis 29 beinhaltet.

31. Lastkraftwagen, der eine Aufprallsperre nach einem der Ansprüche 1 bis 29 beinhaltet.

## Revendications

1. Garniture de sécurité (10) destinée à se déployer sur un corps mobile, comprenant :
- un élément de support (12) destiné à être fixé sur le corps mobile ;
- un pare-chocs (14) écarté de l'élément de support pour venir en prise avec un véhicule durant le choc avec la garniture de sécurité ;
- un système de guidage linéaire (16) pour guider le pare-chocs vers l'élément de support lors du choc ;
- et un absorbeur d'énergie (18) configuré pour absorber l'énergie du choc lorsque le pare-chocs (14) est guidé vers l'élément de support (12) ;
**caractérisée en ce que** le système de guidage comprend des premier et deuxième éléments allongés (22, 24), dont une extrémité de chaque est couplée de manière pivotante selon un angle aigu (α) variable à l'élément de support (12) et un troisième élément allongé (26) est couplé de manière pivotante aux premier et deuxième éléments (22, 24) pour définir avec l'élément de support (12) un parallélogramme (28) avec des variations de grandeur de l'angle aigu (α) déterminant une séparation entre le troisième élément et l'élément de support.

2. Garniture de sécurité selon la revendication 1, dans laquelle le parallélogramme (28) est aligné horizontalement lorsqu'au moins le système de guidage linéaire est déployé.

3. Garniture de sécurité selon la revendication 1 ou la revendication 2, dans laquelle le système de guidage comprend en outre au moins un autre élément allongé (30, 32) couplé de manière pivotante au parallélogramme selon un angle variable.

4. Garniture de sécurité selon la revendication 3, dans laquelle au moins un autre élément allongé définit avec le troisième élément allongé une partie d'un autre parallélogramme (34) agencé en série avec le parallélogramme susmentionné.

5. Garniture de sécurité selon la revendication 4, dans laquelle chaque parallélogramme définit un plan, le plan d'un parallélogramme étant parallèle à celui de l'autre.

6. Garniture de sécurité selon la revendication 4 ou 5, dans laquelle les parallélogrammes sont de taille égale, l'un étant agencé sous forme d'image inversée de l'autre.

7. Garniture de sécurité selon l'une quelconque des revendications précédentes, dans laquelle le pare-chocs et le parallélogramme sont couplés de manière pivotante via au moins un élément allongé.

8. Garniture de sécurité selon l'une quelconque des revendications précédentes, dans laquelle le système de guidage comprend au moins un autre ensemble d'éléments allongés, agencés de manière équivalente aux premier, deuxième et troisième éléments allongés, chaque au moins un autre ensemble d'éléments allongés définissant avec l'élément de support un parallélogramme (28') supplémentaire respectif.

9. Garniture de sécurité selon la revendication 8, dans laquelle un parallélogramme supplémentaire respectif est agencé sur un côté latéral du parallélogramme.

10. Garniture de sécurité selon la revendication 9, dans laquelle le un parallélogramme supplémentaire respectif est agencé sous forme d'image inversée du parallélogramme.

11. Garniture de sécurité selon la revendication 9 ou 10, dans laquelle les parallélogrammes sont couplés de manière pivotante via des éléments allongés respectifs à un support commun (40).

12. Garniture de sécurité selon l'une quelconque des revendications 8 à 11, dans laquelle un parallélogramme supplémentaire respectif est agencé dans un plan parallèle mais écarté de celui du parallélogramme.

13. Garniture de sécurité selon la revendication 12, dans laquelle l'absorbeur d'énergie est disposé dans l'écartement entre les plans respectifs des parallélogrammes.

14. Garniture de sécurité selon l'une quelconque des revendications 1 à 13, dans laquelle l'absorbeur d'énergie est sacrificiel.

15. Garniture de sécurité selon la revendication 14, dans laquelle l'absorbeur d'énergie sacrificiel comprend une structure en nid d'abeille.

16. Garniture de sécurité selon la revendication 15, dans laquelle la structure en nid d'abeille comprend des cellules ayant une coupe transversale hexagonale, les cellules étant alignées avec leurs axes colonnaires alignés parallèlement à une ligne théorique s'étendant entre l'élément de support et le pare-chocs.

17. Garniture de sécurité selon l'une quelconque des revendications 1 à 13, dans laquelle l'absorbeur d'énergie est réutilisable après avoir absorbé l'énergie de choc.

18. Garniture de sécurité selon la revendication 17, dans laquelle l'absorbeur d'énergie réutilisable comprend un frein à disque.

19. Garniture de sécurité selon la revendication 17, dans laquelle l'absorbeur d'énergie réutilisable comprend un dispositif d'actionnement à fluide (60).

20. Garniture de sécurité selon la revendication 19, dans laquelle le dispositif d'actionnement à fluide est aligné le long d'une diagonale du parallélogramme.

21. Garniture de sécurité selon la revendication 19 ou la revendication 20, dans laquelle le dispositif d'actionnement à fluide procure une résistance vis-à-vis d'un changement dans la séparation entre les troisième élément et élément de support, la résistance étant prédéterminée en fonction des usages prévus et des possibles chocs potentiels.

22. Garniture de sécurité selon la revendication 19 ou 20, dans laquelle le dispositif d'actionnement à fluide procure une résistance vis-à-vis d'un changement dans la séparation entre les troisième élément et élément de support, la résistance étant modifiée par un régulateur (64).

23. Garniture de sécurité selon la revendication 22, dans laquelle le régulateur modifie dynamiquement la résistance en fonction des informations détectées par un capteur (66) concernant les caractéristiques du choc.

24. Garniture de sécurité selon la revendication 22, dans laquelle le régulateur modifie la résistance, de telle sorte qu'il y ait une résistance accrue au-dessous d'une vitesse seuil et une résistance réduite au-dessus d'une vitesse seuil.

25. Garniture de sécurité selon la revendication 24, dans laquelle la vitesse seuil est de 8 km/h (5 mph).

26. Garniture de sécurité selon la revendication 24 ou la revendication 25, comprenant au moins un ensemble de seulement deux cadres en forme de parallélogramme raccordés en série.

27. Garniture de sécurité selon la revendication 26, dans laquelle le au moins un ensemble comprend un premier cadre en forme de parallélogramme raccordé au pare-chocs et un second cadre en forme de parallélogramme raccordé à l'élément support destiné à être fixé sur le corps mobile.

28. Garniture de sécurité selon la revendication 27, lorsqu'elle dépend de la revendication 19, dans laquelle le dispositif d'actionnement hydraulique est raccordé le long d'une diagonale du premier cadre formant un parallélogramme.

29. Garniture de sécurité selon l'une quelconque des revendications précédentes, dans laquelle le pare-chocs comprend un élément sacrificiel configuré pour adopter un profil durant le choc correspondant à celui de l'objet provoquant le choc.

30. Système de pare-chocs pour voiture incorporant une garniture de sécurité selon l'une quelconque des revendications 1 à 29.

31. Camion incorporant une garniture de sécurité selon l'une quelconque des revendications 1 à 29.
